# EUROPEAN PATENT APPLICATION

(11) **EP 4 124 550 A1**
(43) Date of publication of application: **01.02.2023**
(21) Application number: 22186883.9
(22) Date of filing: 26.07.2022
(51) Int. Cl.: B62J 17/083, B62K 7/02, B60J 7/20, B62B 9/14

(54) **CARGO BIKE AND RAIN COVER**

(30) Priority: 30.07.2021 NL 2028899
(71) Applicant: Cyclr B.V., 1165 MK Halfweg (NL)
(72) Inventor: Carels, Nikolai Rolf, 2014 EK Haarlem (NL)
(74) Representative: De Vries & Metman

(57) **Abstract**

A transport vehicle (1) comprises a frame (3), a cargo hold (5) and a strut compartment (11), and a canopy strut (9) which is mounted in the strut compartment (11) and reversibly extendible from a first configuration to a second configuration. In the first configuration the strut (9) is collapsed and at least partly contained in the strut compartment (11), and in the second configuration the strut (9) is extended from the strut compartment (11) to support a canopy fabric (15) along at least part of the strut (9) over at least part of the cargo hold (5) for covering at least part of the cargo hold (5).

## Description

### TECHNICAL FIELD

The present disclosure relates to a transport vehicle comprising an open top cargo hold, in particular a human-powered transport vehicle and/or an open people carrier, such as a cargo cycle, a perambulator, a stroller, an open children group transport vehicle. More in particular the present disclosure relates to cargo bicycles, more in particular cargo bicycles having the cargo hold in front of a steering handlebar, wherein a steerable front wheel may be arranged in front of the cargo hold.

### BACKGROUND

Transport vehicles, such as cargo bicycles, of the above-referenced type are well known. Such vehicles may be used for transportation of inanimate cargo and/or live cargo, such as pets and/or persons, in particular (small) children. The cargo hold may comprise a bottom wall and side walls and it may have, in use, an open top, e.g. being box-, basket-, or crate-like. It is generally desired that the cargo hold and in particular cargo in the cargo hold is protected from weather influences. To that effect, a canopy may be used over the cargo hold. Various canopy structures have been developed. A common problem is addressing the conflicting demands for easy setting up the canopy, robustness of the set-up canopy, easy access to the cargo hold when the canopy is set up in place, volume and weight of the canopy when set up and/or in use, easy removing the canopy, and weight and/or volume for storing a removed canopy.

It is noted that JP 3 139263 U7, CN 106 143 712 A, GB 168 625 A, US 2016/144708 A1, and WO 2020/053802 A1, relate to vehicles with canopies, US 2006/261575 A1 relates to a convertible stroller/tricycle and WO 2020/175981 A1 relates to a transformable (cargo) cycle.

### SUMMARY

In view of the above, herewith is provided a transport vehicle, in particular a human-powered transport vehicle and/or an open people carrier, such as a cargo cycle, a perambulator, a stroller, or an open children transport vehicle.

The vehicle comprises a frame, a cargo hold having a side wall and an open top, and a strut compartment, and a canopy strut which is mounted in the strut compartment and reversibly extendible from a first configuration to a second configuration.

In the first configuration the strut is collapsed and at least partly contained in the strut compartment, and in the second configuration the strut is extended from the strut compartment to support a canopy fabric along at least part of the strut over at least part of the cargo hold for covering at least part of the cargo hold, in particular at least part of a cavity of the cargo hold.

Thus, the vehicle simplifies arranging a canopy and removing a canopy by alternating between the first and second configurations and supporting a canopy fabric along at least part of the strut in the second configuration.

Since in the first configuration the strut is collapsed and at least partly contained in the strut compartment, hindrance of/by the strut may be prevented, and the strut may be inconspicuous. Moreover, the strut may be available with the vehicle at any time, so that a canopy may be set up at will by extending the strut from the first into the second configuration. Note that when the canopy fabric is removed the strut may remain in place if so desired nevertheless. The strut compartment may shield the strut when collapsed.

The cargo hold may comprise a bottom wall and side walls and it may have, at least in use for transporting cargo, an open top, e.g. being box-, basket-, or crate-like. The top may be open permanently or after removal of a cover like a lid or cover for closed storage between uses. The first and second configurations may differ at least predominantly in length of the strut along a direction of elongation of the strut.

The cargo hold may comprise a bottom wall and side walls which may provide an open top, e.g. being box-, basket-, or crate-like. The strut compartment may be at least in part be integrated into the frame and/or the cargo hold. The strut compartment and/or at least part of the strut, in particular in the second configuration may extend substantially vertical.

Note that herein, unless otherwise specified, terms like horizontal, vertical, above, below, etc. refer to a normal operating position of the vehicle such as standing/driving on a road or similar surface, and covering refers to arrange one covering structure vertically over a covered structure, e.g. so as to protect the covered structure against substances from above, in particular precipitation.

The vehicle may comprise plural such struts and strut compartments for together supporting the canopy fabric. Any reference to, and/or description of, a strut and/or strut compartment, in this disclosure may equally apply to one or more further such struts and/or strut compartments of the vehicle.

The strut may be reversibly extendible to a third configuration between the first and second configurations; preferably being extendible in a multitude of predetermined positions and/or being continuously adjustable between the first and second configurations.

Thus, the strut may be adjusted to a desired configuration, in particular to a desired length, for supporting a canopy fabric of a particular size.

A portion of the strut may be telescopic or scissoring extendible in longitudinal direction between the first and second configurations.

A telescopic strut portion simplifies collapsing the strut portion within a well-defined volume that may be small. A telescopic strut may comprise a series of nested segments, in particular at least partly C-shaped- and/or at least partly tubular segments, which segments are axially displaceable relative to each other along an axis, and wherein some or all segments may be coaxial. One or more of the segments may be at least temporarily fixed in one or more relative positions to another segment by one or more of a lock, a stop and/or a latch which may be selectively openable and/or removable, for (reversibly) adjusting a length of the strut to a predetermined amount.

Also or alternatively, a portion of the strut may be scissoring extendible which also allows collapsing the strut portion in a well-defined volume that may be small. The scissoring may be in one or more directions about the direction of elongation of the strut.

In an embodiment, in at least in the second configuration a portion of the strut is reversibly arrangeable in a first position over a first part of the cargo hold to support a canopy fabric along at least part of the strut over at least a first covered part of the cargo hold, and a second position over a second part of the cargo hold, different from, and preferably a smaller than, the first part of the cargo hold, to support the canopy fabric next to the first covered part of the cargo hold for uncovering the first covered part of the cargo hold. And possibly in one or more positions between the first and second positions.

This facilitates obtaining / granting access to the cargo hold, with little or no hindrance of the strut and/or of the canopy fabric, if present.

The first and second positions may differ in vertical and/or in one or two horizontal directions. E.g., at least part of the strut may be movable about one or more axes of rotation. At least part of the strut may rotate about an axis for uncovering the at least part of the cargo hold.

Also or alternatively, at least part of the strut may be reversibly deformable, in particular resiliently deformable and/or (possibly resiliently) foldable from the first position to the second position. The first and second positions may be stabilised by gravity and/or by a system comprising one or more of a latch, a lock, a hook, a resilient element like a spring, etc.

The strut may comprise a hinge providing a hinge axis perpendicular to the direction of extension of the strut. Then, two portions of the strut may be, at least in the second configuration, foldable with respect to each other about the hinge.

The hinge may be a discrete hinge defining a particular axis of rotation and/or a flexible segment between the strut portions defining a particular zone of deformation allowing the folding without defining a particular axis of rotation.

A folding hinge or -segment in the strut may assist one or more of providing an expectable transition between the first and second positions, identifying support sections for supporting different canopy sections, forming the canopy into a particular shape, and dividing between sections having different functionalities.

In at least one of the first and second configurations at least part of the strut may be fixed in the strut compartment. Thus, the position of the strut relative to the strut compartment may be well defined and/or removal of the strut from the strut compartment and/or the vehicle as a whole may be prevented. The fixation may be releasable, e.g. by opening and/or removal of a lock, screws, bolts etc. However, the fixation may also be at least in part substantially permanent wherein part of the strut and one or more of the frame, the cargo hold and the strut compartment may be an integral whole.

In an embodiment comprising an at least partly telescopic and/or foldable strut, a base portion of the strut may form at least part of the strut compartment.

The strut compartment may be integrated into a side wall of the cargo hold and/or be divided from a cargo holding cavity by one or more walls which may be reversibly openable and/or the closable.

The vehicle may comprise a latch and/or lock for locking the strut in the first and/or second configuration. Thus, accidental and/or unauthorised extension and/or collapse and/or removal of the strut may be prevented. The lock may require a key, e.g. a physical and/or electromagnetic key and/or a physical and/or digital code provided to the lock by suitable physical and/or electronic means like buttons, sensors, transmitter/receivers etc. The lock may be connected with an engine control of the vehicle.

The vehicle may comprise a driver section which may comprise one or more of a steering wheel, a handlebar, a saddle, a stand, pedals and an engine control. The vehicle may be a cargo cycle which may comprise an electric- and/or combustion engine.

The strut may comprise a cantilever arm over the cargo hold. This may simplify design and/or construction of the canopy, at least of the canopy strut. Also or alternatively, this may provide freedom of movement underneath the canopy for human and/or animal occupants of the cargo hold.

The vehicle may comprise a driver section. Then, in the second configuration, at least part of the strut may extend over at least part of the driver section. Thus, not only the cargo hold but also the driver section may be covered by the canopy. The vehicle may comprise a driver section on one side of the cargo hold and the strut compartment may then be located on an opposite side of the cargo hold from the driver section, possibly within or outside of the cargo hold. This may assist a compact and/or an aerodynamic shape of the vehicle. Also or alternatively, this may simplify inspection of cargo by a driver and/or communication with (live) cargo in the cargo hold.

The vehicle, in particular the strut, may comprise a connector and/or a support for supporting the strut on and/or connecting the strut with at least one of
the frame and/or the cargo hold on an opposite side of the cargo hold with respect to the strut compartment, and
at least part of the driver section, in particular supporting the strut on at least part of a steering console and/or handlebar comprised in the driver section.

This may fortify the strut and/or the canopy as a whole, and/or this may allow a heavy canopy fabric. Further, safety of the canopy may be increased.

The connector may be integrated at least in part with a latch or lock for locking the strut in the first and/or the second configuration.

The frame and/or the cargo hold may be reversibly extendible between a short configuration wherein the vehicle has a small length in a driving direction and a long configuration wherein the vehicle has a large length in a driving direction.

Thus the vehicle may be reconfigured between the long and short configurations as desired, and possibly one or more configurations of intermediate length, e.g. for transporting more or less cargo and/or for reduction of (parking) space occupied by the bicycle in the short configuration. A deformable cargo bicycle of such kind is disclosed in WO 2020/175981, which disclosure is herein incorporated by reference.

Preferably then, in the second configuration the strut is extended from the strut compartment to support a canopy fabric over the cargo hold in the long configuration. Thus the strut would be long enough to support a canopy fabric to cover the cargo hold in the long configuration.

The vehicle may comprise a driver section. Then, in the second configuration, at least part of the strut may extend over the cargo hold to support a canopy fabric over the cargo hold and at least in part over at least part of the driver section. This facilitates protecting also or alternatively to the cargo hold, at least part of the driver section. In such length-adjustable vehicle by collapsing the vehicle to the short configuration.

The vehicle may comprise a canopy fabric for covering the cargo hold while supported by the strut in at least the second configuration. At least part of the canopy fabric may (be used to) cover the cargo hold also in the first configuration.

The canopy fabric may comprise one or more segments of cloth (e.g. woven, knit or non-woven), film, mesh, gauze, etc, alone or in combination (e.g. multilayered), of which at least part may be transparent and/or elastic. The canopy fabric may comprise plural segments fixed and/or releasably attached to each other such as a flap segment of cloth or film for (further) closing a mesh segment against wind or rain etc. The canopy fabric may be provided with one or more fasteners such as strings, buttons, button openings, zippers, rings, hooks, hook-and-loop-type fasteners (e.g. Velcro), magnets, etc. for releasably fastening at least part of the canopy fabric to at least part of the frame, the cargo hold and/or to another part of the canopy fabric.

The canopy fabric may extend from the strut compartment along the strut, in particular along the part of the strut extending from the strut compartment

At least one of the vehicle and the canopy fabric, if present, may comprise fasteners (e.g. of the aforementioned kind) for removably fixing at least part of the canopy fabric over at least part of the cargo hold. In particular, the vehicle and the canopy fabric may comprise matching fasteners for removably fixing at least part of the canopy fabric over at least part of the cargo hold.

The vehicle may comprise a canopy fabric compartment. Thus, a complete canopy may be carried along also when the canopy is not in place and/or the strut is in the first configuration.

The strut compartment and/or the canopy compartment, when provided, may be provided with a lid for reversibly closing, preferably locking, the respective compartment. Thus, unintended and/or unauthorised removal of the strut and/or the canopy fabric may be prevented. The canopy fabric compartment may be integrated with a wall of the cargo hold and/or may be formed as and/or be comprised in a bench or chair in the cargo hold, e.g. underneath a seat thereof.

A cargo vehicle of the presently provided type may also be provided by retrofitting a cargo vehicle and replacing an existing cargo hold by a cargo hold comprising a strut compartment, and a canopy strut as discussed herein. Thus, in aspect herewith is provided a cargo hold for a transport vehicle according to any preceding claim, comprising a strut compartment, and a canopy strut which is mounted in the strut compartment and reversibly extendible from a first configuration to a second configuration, wherein in the first configuration the strut is collapsed and at least partly contained in the strut compartment, and in the second configuration the strut is extended from the strut compartment to support a canopy fabric along at least part of the strut over at least part of the cargo hold for covering at least part of the cargo hold.

### BRIEF DESCRIPTION OF THE DRAWINGS

The above-described aspects will hereafter be more explained with further details and benefits with reference to the drawings showing a number of embodiments by way of example.
Figs. 1A and 1B show a length-extendible cargo bicycle as example of a transport vehicle provided herein;
Figs 2A, 3A, 4A, 5A, and 6 show the bicycle of Fig. 1 in different configurations with Figs. 2B, 3B, 4B, and 5B, showing accordingly a canopy strut; Fig. 2C is a detail of the bicycle from another viewpoint;
Figs. 7-9 show the bicycle of Fig. 1 provided with a canopy fabric;
Figs. 10-12 show the bicycle of Fig. 1 provided with a canopy fabric in different use situations;
Fig. 13 shows another embodiment;
Fig. 14 shows a further embodiment;
Figs. 15A-15C indicate a scissoring strut construction.

### DETAILED DESCRIPTION OF EMBODIMENTS

It is noted that the drawings are schematic, not necessarily to scale and that details that are not required for understanding the present invention may have been omitted. The terms "upward", "downward", "below", "above", and the like relate to the embodiments as oriented in the drawings, unless otherwise specified. Further, elements that are at least substantially identical or that perform an at least substantially identical function are denoted by the same numeral, where helpful individualised with alphabetic suffixes.

Further, unless otherwise specified, terms like "detachable" and "removably connected" are intended to mean that respective parts may be disconnected essentially without damage or destruction of either part, e.g. excluding structures in which the parts are integral (e.g. welded or moulded as one piece), but including structures in which parts are attached by or as mated connectors, fasteners, releasable self-fastening features, etc. The verb "to facilitate" is intended to mean "to make easier and/or less complicated", rather than "to enable".

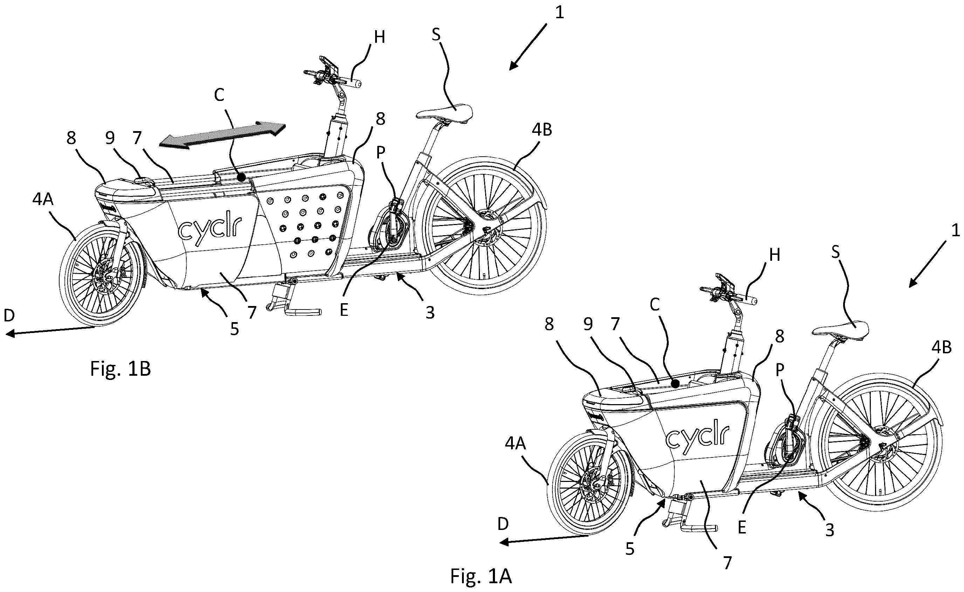

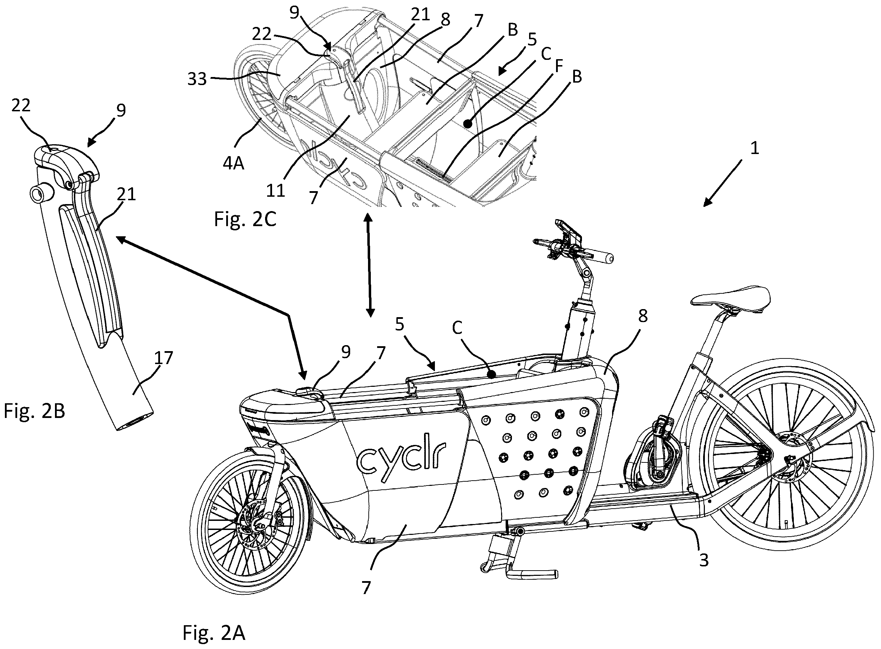

Figs. 1A and 1B show, as an example of a transport vehicle considered herein, a length-adjustable cargo bicycle 1. Figs. 2A-2C indicate further details of the bicycle 1. The bicycle 1 has a frame 3 supporting wheels 4A, 4B and a cargo hold 5. A driver section S, having a steering handlebar H, and a steerable wheel 4A are located on opposite sides of the cargo hold 5. The cargo hold 5 here comprises a bottom wall providing a floor F, longitudinal side walls 7, and transverse side walls 8 providing a cavity C with an open top. The cargo hold 5 is, as an option, configured for transporting persons, in particular children in the cavity C, for which one or more benches B may be provided as shown.

It is noted that the present concepts are equally applicable to fixed-length cargo bicycles, cargo multicycles (having three or more wheels) and/or cargo vehicles such as delivery vehicles and/or children group transporters comprising a cargo hold having an open top in use (and any number of wheels). The vehicle may have may be configured for a driver who is seated when driving the vehicle and/or or for a driver who is standing up when driving the vehicle. The vehicle may comprise pedals P and/or an engine E (the shown bicycle 1 having both); the engine may then be designed as a driving assistant for supporting human propulsion and/or as a primary or even sole means of propulsion. The vehicle may have a rated top speed of 50 km/hr or less, in particular 40 km/hr or 35 km/hr or less such as having a rated top speed of 30 km/hr, 25 km/hr, 20 km/hr, 17,5 km/hr, 16 km/hr, 15 km/hr or 10 km/hr. The top speed may be dependent on (local) traffic regulations and/or cargo to be transported, e.g. a children transporter may have a lower, safer, top speed than a parcel delivery vehicle.

The cargo bicycle 1 is reversibly extendible between a short configuration (Fig. 1A) wherein the bicycle 1 has a small length in a driving direction D and a long configuration (Fig. 1B) wherein the bicycle 1 has a large length in the driving direction D.

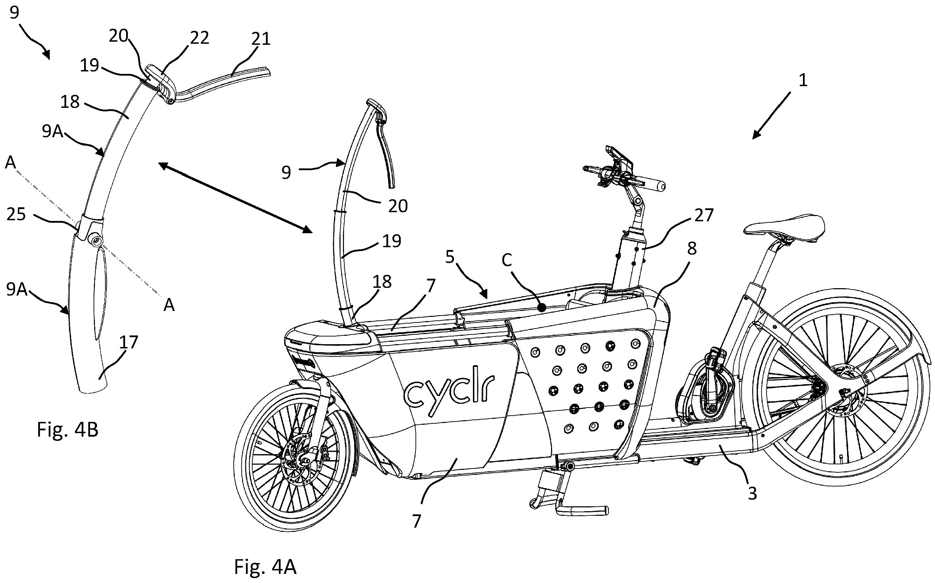

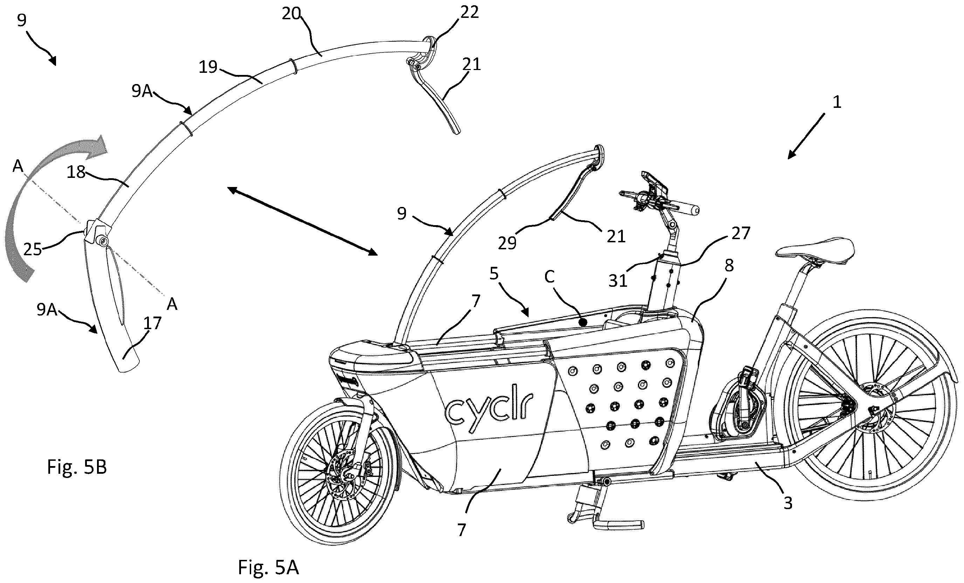

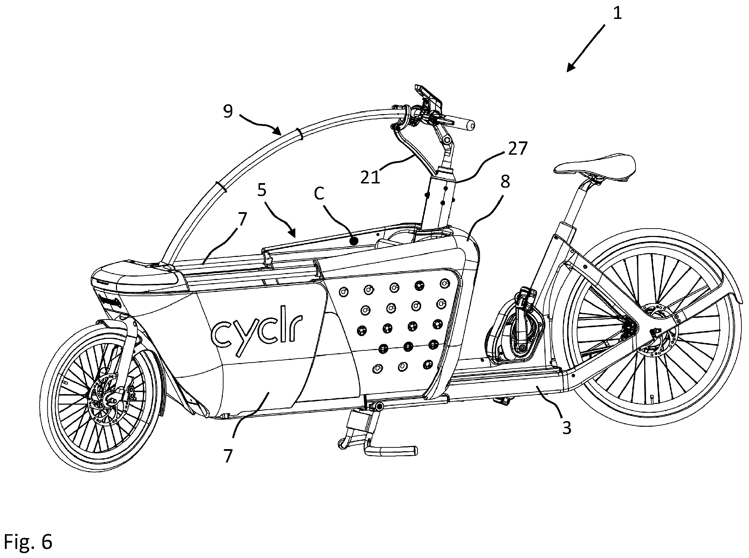

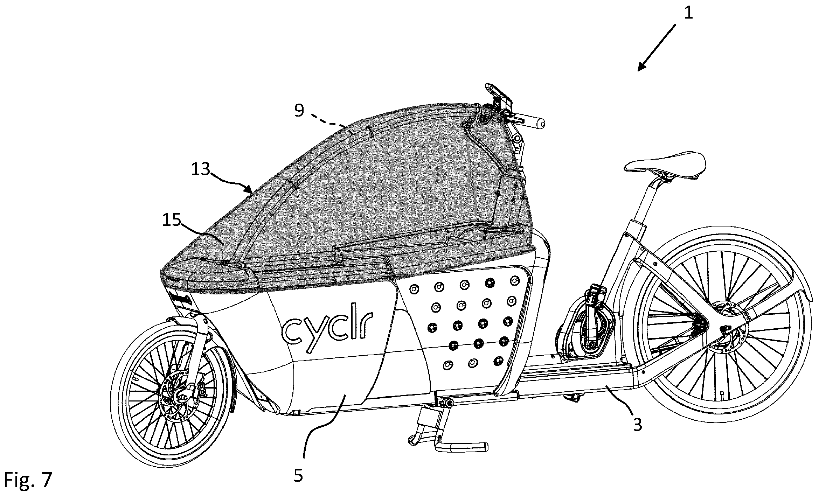

Figs 2A, 3A, 4A, 5A, 6 show the bicycle 1 in different configurations and show that the bicycle 1 comprises a canopy strut 9 which is reversibly extendible in a longitudinal direction from a first configuration (Fig. 2A) to a second configuration (Figs. 4A, 5A, 6) differing in length, wherein as an option in the second configuration the strut 9 is deformable (Figs. 5A, 6, see below). Figs. 2A, 2B, 3B, 4B, 5B show details of the strut 9, as indicated with arrows in Figs 2A, 2B. Fig. 7 shows the bicycle with a fully deployed canopy 13.

Best seen in Fig. 2C, the canopy strut 9 is mounted and fixed in a strut compartment 11, here being integrated partly in a frontal side wall 8 of the cargo hold 5.

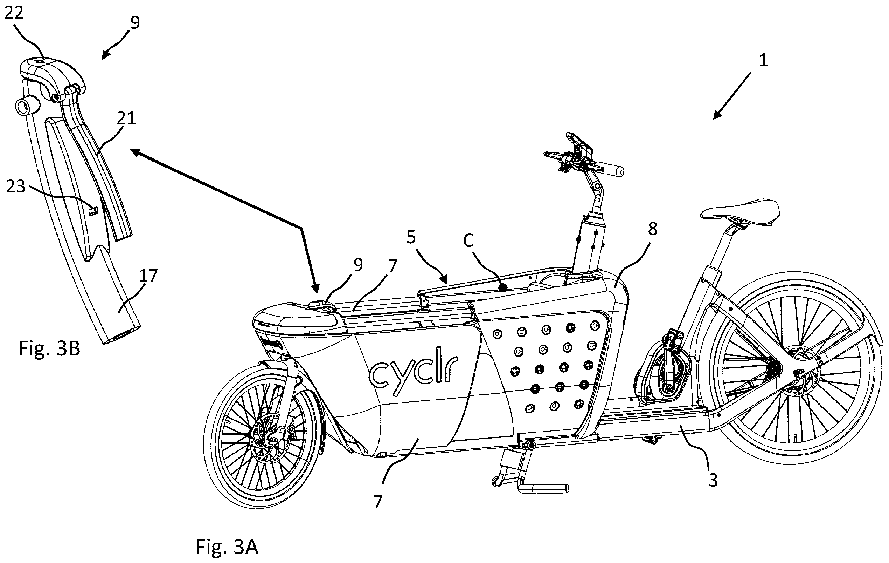

In the first configuration (Fig. 2A, 2C, 3A) the strut 9 is collapsed and at least partly contained in the strut compartment 11. In the second configuration (Figs. 4A, 5A, 6) the strut 9 is extended from the strut compartment 11 to extend over at least part of the cargo hold 5 to support a canopy fabric 15 along at least part of the strut 9 over the cargo hold 5 for covering at least part of the cargo hold 5 by the deployed canopy 13. This is shown in Fig. 7 for the bicycle 1 in the long configuration.

Figs. 2A, 3A, 4A show that the shown strut 9 is telescopic and comprises a series of nested segments 17, 18, 19, 20 here as an option being tubular segments. For extension of the strut 9, the segments 18-20, are extendible in longitudinal direction L from a bottom segment 17 fixed in the strut compartment 11. In other embodiments more or fewer segments may be provided in a strut. Figs. 4A, 4B show different amounts of extension.

To simplify extension, the strut 9 comprises an optional handle 21 which may be movably attached to other strut portions, e.g. hinged as shown. For protection of the strut 9 and/or users from each other and/or protection against weather etc, the strut may be provided with a cap 22 covering an end of the strut 9. Such cap 22 may be at least in part be integrated with the handle 21 or provide a hinge for the latter.

For extension, the strut 9 must, as an option, be unlocked from the first configuration. In the shown embodiment, the handle 21 is provided with a latch removably insertable into a matching slot 23, which may be provided with a lock requiring a key of sorts (not shown). Also or alternatively, a button-operable latch (not shown) may be provided which button may be covered for protection by the handle 21. One or more latches (not shown) may be provided to secure at least some of the strut segments 17-20 with respect to each other in the extended configuration.

As an option, some strut segments 17, 18 comprise mated structures, e.g. comprising a rotary sleeve 24 holding segment 18, providing, at least when suitably arranged with respect to each other, a hinge 25. The hinge 25 provides a hinge axis A perpendicular to the longitudinal direction L of the strut 9, and/or substantially horizontal. Sections 9A, 9B of the strut 9 are foldable about the hinge axis A (Figs. 4A-6). Operation of the hinge 25 and/or folding about the hinge 25 may be blocked; in the shown embodiment, in a (partly) collapsed configuration one strut segment 18 being accommodated in another strut segment 17 along the axis of extension prevents folding about the hinge axis A (compare Figs. 4B, 5B).

The strut 9 may comprise, at least in the second configuration, a cantilever arm over at least part (the cavity C of) of the cargo hold 5, as shown in Fig. 5A. However, a connector and/or a support may be provided for connecting the strut 9 with the vehicle 1 in multiple positions. Here, the handle 21 may provide such support, see Figs. 5A, 6, to support the strut 9 on an opposite side of the cargo hold 5 with respect to the strut compartment 11. Thus connected the end of the strut may be supported in vertical direction and/or be stabilised in horizontal direction. E.g., the handle 21 and a steering column 27 of the driver section S are provided with matching connectors 29, 31 for connecting the strut 9. Also or alternatively, the handle may comprise a forked end to connect with and accommodate part of a steering column.

One or more further connectors 32 may be provided for supporting (a portion of) the strut 9 in other positions, if so desired; see also below. A connector may be provided on and/or integrated in a steering handle, a display, a mount for a handheld device etc., but preferably provide a stationary position relative to the frame 3 when the vehicle is in use, e.g. being unaffected by steering and/or operating controls.

With the strut 9 in place, the canopy fabric 15 may be arranged over the cargo hold 5 and over and along at least part of the strut 9 to shelter contents and/or occupants of the cargo hold 5. The strut 9 supports the canopy fabric 15 from below and urges it upward, e.g. providing head room for occupants and/or providing sloping walls for letting objects and/or precipitation flow or roll down along the canopy. The canopy fabric 15 may be fixed to one or more of (side walls 7, 8 of) the cargo hold 5, the frame 3, and the strut 9, with one or more fasteners and/or an elastic portion of the canopy fabric 15, e.g. a bungee cord in a seam of the canopy fabric 15 engaging matching protrusions and/or recesses in (side walls 7, 8 of) the cargo hold 5 etc.

The strut 9 may be straight or at least partly bent as shown. A bent strut 9, e.g. having a curve along at least part of its length may be preferred for preventing local (concentration of) forces on or in the canopy fabric 13. The strut 9 may be at least in part resilient to urge the canopy fabric upward and/or accommodate strong forces, however, it is preferred that the strut 9 can withstand canopy weather influences, like one or more of hard wind, storm, torrential rains, heavy snow etc., and support the canopy fabric against that without giving in and/or collapsing on the cargo hold an any contents (e.g. live occupants). Suitable materials may comprise metals like steel, aluminium, titanium, carbon, carbon-fibre and/or glass fibre-based materials, like fortified polymers, etc. such as used for tent poles, and/or suitable combinations thereof.

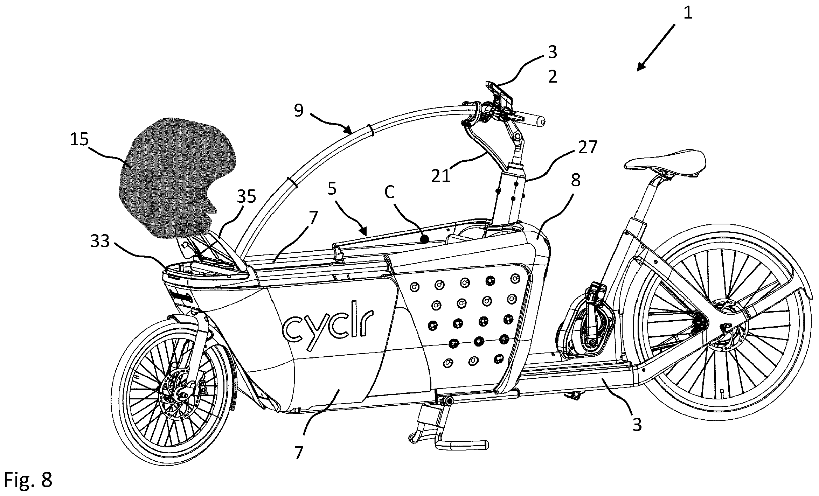

Fig. 8 shows that the bicycle may be provided with a canopy fabric compartment 33 to store and/or transport the canopy fabric 15 when not in use as canopy. The canopy fabric compartment 33 is reversibly closed with an optional lid 35, possibly lockable when closed with a lock (not shown). Similarly, a lid could be provided for the strut compartment 11 (not shown).

The canopy 13 may be arranged over the cargo hold 5 when containing cargo. The canopy fabric 15 may comprise one or more releasable fasteners for opening part of the fabric for accessing the cargo hold 5 and/or for occupants to exit the cargo hold 5.

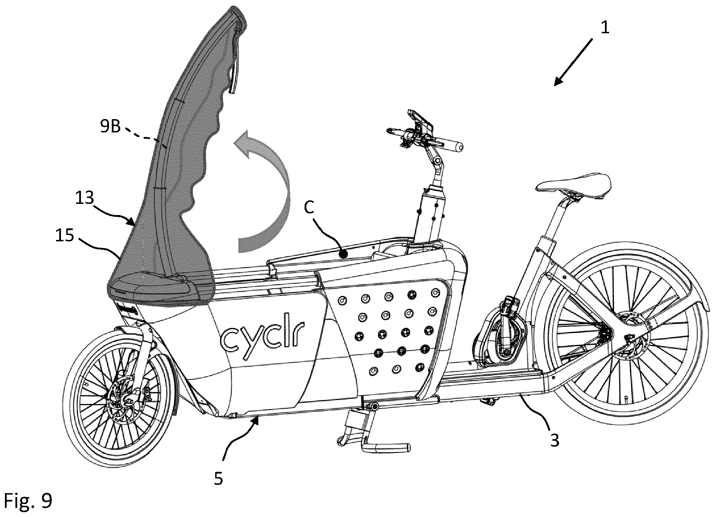

Figs. 7 and 9 show that also or alternatively, as an option, at least part of the canopy 13 including the canopy strut 9 may be rearranged to grant access to / exit from the cargo hold. In particular, as shown in Figs. 7 and 6, the portion 9B of the strut 9 is arrangeable in a first position over the cargo hold 5 to support the canopy fabric 15 along at least part of the strut over a first covered part of the cargo hold 5, in Fig. 7 the entire cargo hold 5. Further, as shown in Fig. 9, the portion 9B of the strut 9 is also arrangeable in a second, substantially upright position; see also Fig. 4A. In this position, the strut 9 extends at most over a second part of the cargo hold 5, which is different from, and significantly smaller than the first part of the cargo hold 5. Thus, the canopy fabric 15 is supported next to (the first covered part of) the cargo hold 5 for uncovering (the first covered part of) the cargo hold 5. Thus, (the canopy fabric 15 of) the canopy 15 may be readily moved aside and providing substantially free access to the cargo hold 5.

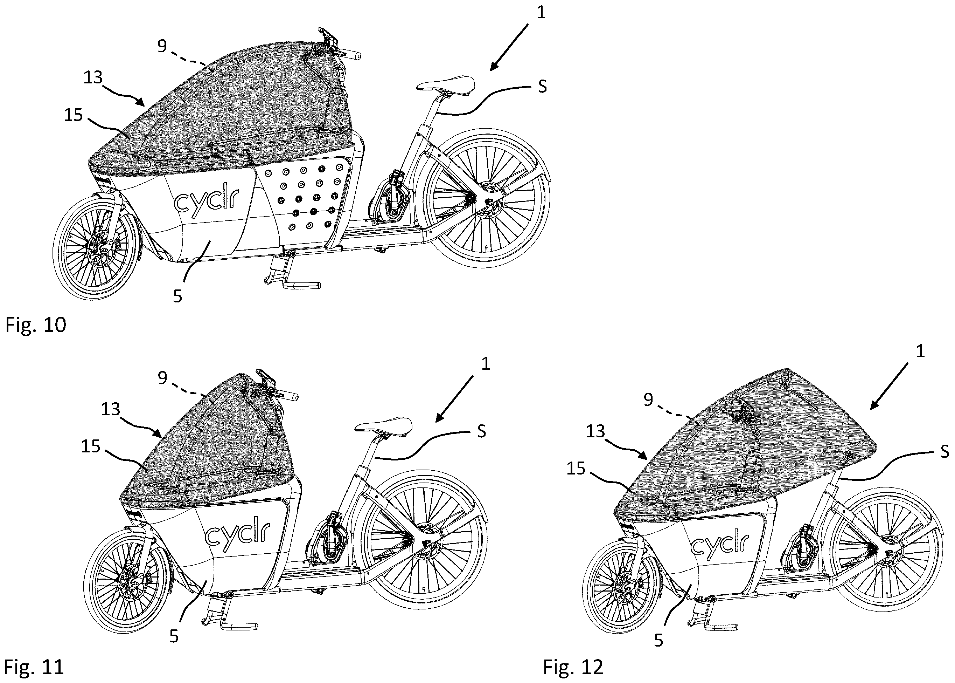

Fig. 10-12 show several options for arranging the canopy 13 when the bicycle is length-adjusted, wherein Fig. 10 is a repetition of Fig. 7 for ease of comparison.

In Fig. 10, the bicycle 1 is arranged in the long configuration and the strut 9 is extended from the strut compartment 11 to a large length and extends over the entire cargo hold 5 to support the canopy fabric 13 over the entire cargo hold 5.

In Fig. 11, the bicycle 1 is arranged in a short configuration (cf. Fig. 1A) and the strut 9 is extended from the strut compartment 11 to a small length and extends over the entire cargo hold 5, which is now short, to support the canopy fabric 13 over the entire (shortened) cargo hold 5.

In Fig. 12, the bicycle 1 is arranged in a short configuration (cf. Fig. 1A) and the strut 9 is extended from the strut compartment 11 to a large length (e.g. cf. Fig. 10) and extends over the entire cargo hold 5, which is now short, and over part of the driver section S, in particular over a handlebar and a driver saddle, to support the canopy fabric 13 over the entire (shortened) cargo hold 5 and over the handles and the saddle. Thus, the handles and saddle are protected in this arrangement, which is particularly suitable for parking the bicycle 1. The canopy fabric may be reversibly attached to part of the vehicle, e.g. part of the frame and/or the saddle for at least temporary fixation.

The canopy fabric 15 may have a generally triangular or arrowhead shape providing frontal cover (cf. Figs. 10, 11) without a further canopy fabric section separating the cargo hold and the driver section. However, a canopy fabric portion providing a rear wall to the canopy providing such separation may be provided (not shown), e.g. for protection against rain, wind, noises, etc. and/or for retaining cargo in the cargo hold. Fig. 12 also shows that the strut 9 is supported on the additional connector 32.

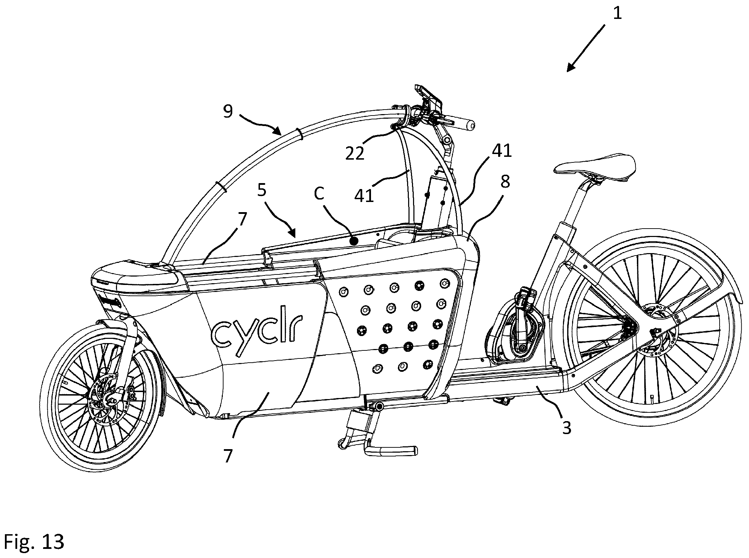

Figs. 13 shows that instead of a single handle-annex-support 21 as visible in Figs. 2-12, an arch shaped support or two supports 41 may be provided for supporting an end (in particular an otherwise free end) of the strut 9 on an opposite side of the cargo hold 5 relative to the strut compartment 11, providing a tripod strut structure. The supports 41 may be extendible and/or be attached to the cargo hold 22 in strut compartments as extendible struts.

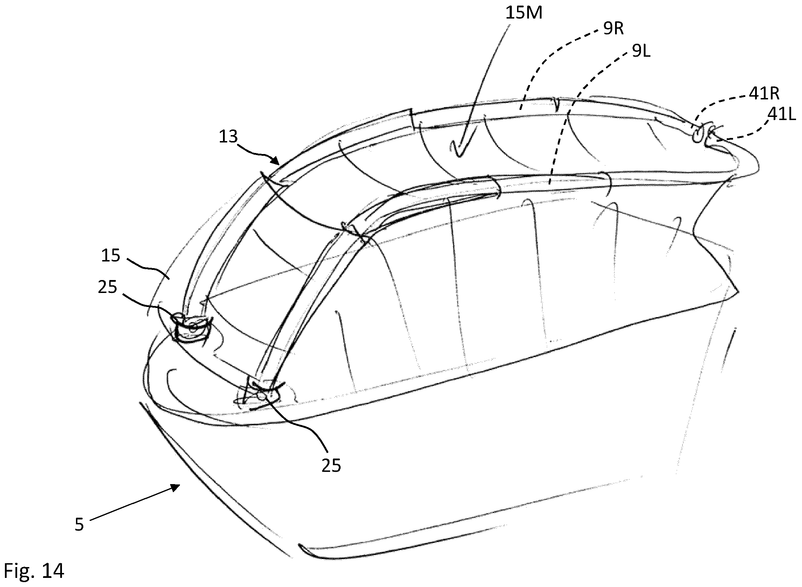

Fig. 14 shows an embodiment of a cargo hold 5 comprising two struts 9L, 9R, extending, in their respective second configurations, substantially parallel to each other, so that the canopy may be provided with comparably large volume and a central canopy fabric segment 15M may provide substantially unobstructed view for passengers. Each strut 9L, 9R, may have a connector at an end 43L, 43R for connection with part of a vehicle frame (not shown). However, instead of two separate struts, a single generally U-shaped strut may also be provided. One or more of the struts 9L, 9R (or: the legs of a U-shaped strut, not shown) may be provided with a hinge 25.

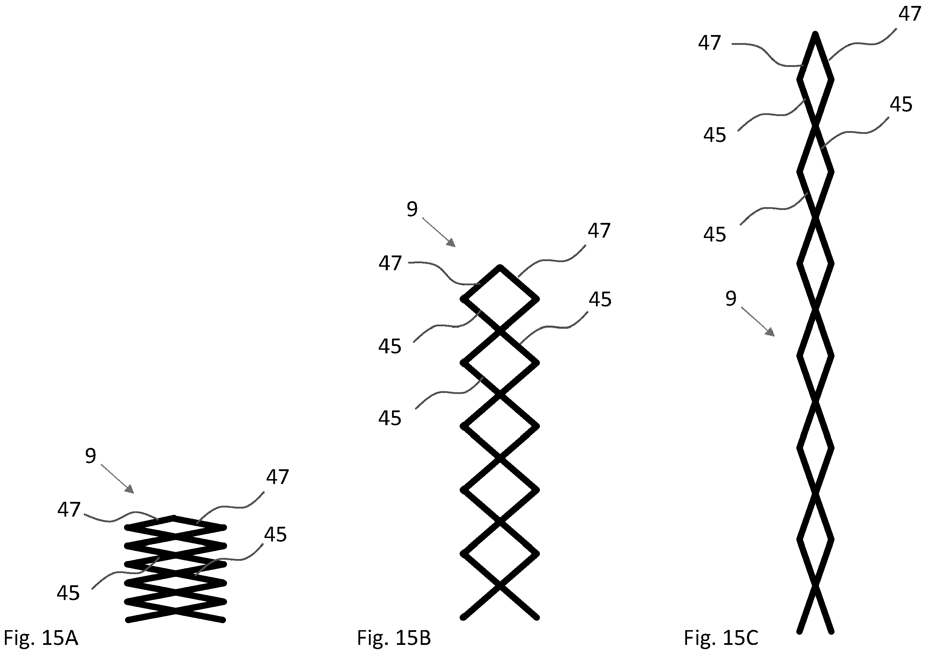

Figs. 15A-15C indicate a scissoring strut construction in three configurations differing in length and width. In the strut 9, segments 45 and 47 are rotatably connected to each other at the crossings of segments, e.g. at the ends and centres of each segment. Scissoring strut portions may be foldable about a hinge to assist one or more of providing an expectable transition between the first and second positions, identifying support sections for supporting different canopy sections, forming the canopy into a particular shape, and dividing between sections having different functionalities.

The bicycle 1 may be driven as desired in at least any one of the configurations shown in Figs. 1A, 1B, 6, 7/10, 9 and 11. If, like in Fig. 12 the canopy fabric 15 is attached to an end of the strut 9, e.g. at or near cap 22, and corners 37 of the canopy fabric 15 are attached to the cargo hold 5, e.g. at rear corners 39 thereof, the bicycle 1 may also be driven while covering part of a driver's legs.

The disclosure is not restricted to the above-described embodiments which can be varied in a number of ways within the scope of the claims.

For instance, more such struts as extensively discussed herein may be provided in the vehicle. E.g., in case of an angular cargo hold, such as having a rectangular or trapezium shape in top view, plural, e.g. two, reversibly extendible canopy struts may be provided along a canopy wall and/or in opposite or adjacent corners, for together supporting a canopy fabric, wherein at least two of the plural struts may be largely parallel in their respective second configurations. A strut may comprise more, less and/or differently shaped strut segments.

Elements and aspects discussed for or in relation with a particular embodiment may be suitably combined with elements and aspects of other embodiments, unless explicitly stated otherwise.

## Claims

1. Transport vehicle (1), in particular a human-powered transport vehicle and/or an open people carrier, such as a cargo cycle, a perambulator, a stroller, or an open children transport vehicle,
the vehicle (1) comprising
a frame (3), a cargo hold (5), and a strut compartment (11), and
a canopy strut (9) which is mounted in the strut compartment (11) and reversibly extendible from a first configuration (Fig. 2A) to a second configuration (Figs. 5A, 6, 7, 9);
wherein in the first configuration (Fig. 2A) the strut (9) is collapsed and at least partly contained in the strut compartment (11), and in the second configuration (Fig. 5A, 6, 7, 9) the strut (9) is extended from the strut compartment (11) to support a canopy fabric (15) along at least part of the strut (9) over at least part of the cargo hold (5) for covering at least part of the cargo hold (5); and
wherein at least a portion of the strut (9) is telescopic extendible, and the strut (9) comprises a hinge (25) providing a hinge axis (A) perpendicular to the direction of extension of the strut (9) and two sections (9A, 9B) of the strut (9) are, at least in the second configuration (Fig. 5A-5B), foldable with respect to each other about the hinge.

2. Transport vehicle (1) according to claim 1, wherein the strut (9) is reversibly extendible to a third configuration (Figs. 4A-4B, 11) between the first configuration (Fig. 2A) and the second configuration (Fig. 5A, 6, 7, 9).

3. Transport vehicle (1) according to any preceding claim, wherein a portion of the strut (9) is scissoring extendible in longitudinal direction between the first configuration (Fig. 2A) and the second configuration (Fig. 5A, 6, 7, 9).

4. Transport vehicle (9) according to any preceding claim, wherein in at least in the second configuration (Fig. 5A, 6, 7, 9) a portion of the strut is reversibly arrangeable in
a first position (Fig. 7) over a first part of the cargo hold (5) to support a canopy fabric (15) along at least part of the strut (9) over at least a first covered part of the cargo hold (5), and
a second position (Fig. 9) over a second part of the cargo hold (5), different from, and preferably a smaller than, the first part of the cargo hold (5), to support the canopy fabric (15) next to the first covered part of the cargo hold (5) for uncovering the first covered part of the cargo hold (5).

5. Transport vehicle (1) according to any preceding claim, wherein in at least one of the first and second configurations (Fig. 2A) at least part of the strut (9) is fixed in the strut compartment (11).

6. Transport vehicle (1) according to any preceding claim, comprising a latch (21) and/or lock for locking the strut (9) in the first and/or second configuration.

7. Transport vehicle (1) according to any preceding claim, wherein the strut (9), at least in the second configuration, comprises a cantilever arm over the cargo hold (5).

8. Transport vehicle (1) according to any preceding claim, wherein the frame (3) and/or the cargo hold (5) is/are reversibly extendible between a short configuration (Fig. 1A) wherein the vehicle (1) has a small length in a driving direction (D) and a long configuration (Fig. 1B) wherein the vehicle has a large length in the driving direction (D), and wherein in the second configuration (Fig. 6, 7) the strut (9) is extended from the strut compartment (11) to support a canopy fabric (15) over the cargo hold (5) in the long configuration (Fig. 6, 8).

9. Transport vehicle (1) according to any preceding claim, wherein the vehicle (1) comprises a driver section (S) and, in the second configuration (Fig. 12), at least part of the strut (9) extends over at least part of the driver section (S) and/or the driver section is (S) on one side of the cargo hold (5) and wherein the strut compartment (11) is located on an opposite side of the cargo hold (5) from the driver section (S).

10. Transport vehicle (1) according to claim 9, wherein the vehicle (1), in particular the strut (9), comprises a connector (29, 31, 32) and/or a support (21) for connecting the strut (9) with at least one of
the frame (3) and/or the cargo hold (5) on an opposite side of the cargo hold (5) with respect to the strut compartment (11), and
at least part of the driver section (S), in particular supporting the strut (9) on at least part of a steering console (35) and/or handlebar (H) of the driver section.

11. Transport vehicle (1) according to any preceding claim, comprising a canopy fabric (15) for covering the cargo hold (5) while supported by the strut (9) in at least the second configuration (Fig. 7).

12. Transport vehicle (1) according to any preceding claim, wherein the vehicle (1), in particular the frame (3) and/or the cargo hold thereof (5), and/or and the canopy fabric (15), if present, comprise fasteners for removably fixing at least part of the canopy fabric (15) over at least part of the cargo hold (5).

13. Transport vehicle (1) according to any preceding claim, comprising a canopy fabric compartment (33).

14. Transport vehicle (1) according to any preceding claim, wherein the strut compartment (11) and/or the canopy fabric compartment (33), when provided, is provided with a lid (35) for reversibly closing, preferably locking, the respective compartment (11, 35).

15. Cargo hold (5) for a transport vehicle (1) according to any preceding claim, comprising a strut compartment (11), and a canopy strut (9) which is mounted in the strut compartment (11) and reversibly extendible from a first configuration to a second configuration;
wherein in the first configuration the strut (9) is collapsed and at least partly contained in the strut compartment (11), and in the second configuration the strut (9) is extended from the strut compartment (11) to support a canopy fabric (15) along at least part of the strut (9) over at least part of the cargo hold (5) for covering at least part of the cargo hold (5); and
wherein at least a portion of the strut (9) is telescopic extendible, and the strut (9) comprises a hinge (25) providing a hinge axis (A) perpendicular to the direction of extension of the strut (9) and two sections (9A, 9B) of the strut (9) are, at least in the second configuration (Fig. 5A-5B), foldable with respect to each other about the hinge.
